# EUROPEAN PATENT APPLICATION

(11) **EP 1 253 410 A2**
(43) Date of publication of application: **30.10.2002**
(21) Application number: 02008279.8
(22) Date of filing: 22.04.2002
(51) Int. Cl.: G01F 23/296, G01F 23/00, B67D 5/12, B67D 5/30, B67D 5/28

(54) **Device for checking the quantity of gasolines, diesel fuels, fuels or liquids in general during introduction in a tank**

(30) Priority: 27.04.2001 IT MI20010889
(71) Applicant: Hoga Italia S.p.A., 20124 Milano (IT)
(72) Inventor: Cilia, Giuseppe, 28100 Novara (IT); Galimberti, Roberto, 20090 San Felice di Segrate, (Milan) (IT); Galimberti, Sergio, 20129 Milano (IT); Pregnolato, Aldo, 20133 Milano (IT)
(74) Representative: Modiano, Guido, Dr.-Ing.

(57) **Abstract**

A device for checking the quantity of gasolines, Diesel fuels, fuels or liquids in general during introduction in a tank, comprising at least one ultrasound emission source and at least one ultrasound receiver, the ultrasound emission source being arranged so as to send a train of sound waves toward the free surface of the liquid that is present in the tank and to receive the sound beam reflected by the free surface of the liquid, the ratio of the speed of the sound waves with respect to the time between the emission of the sound waves by the ultrasound source and the reception of the sound waves providing a distance that constitutes a datum for calculating the quantity of liquid introduced in the tank.

## Description

The present invention relates to a device for checking the quantity of gasolines, Diesel fuels, fuels or liquids in general during insertion in a tank. More particularly, the invention relates to a device for checking the quantity of gasolines, Diesel fuels, fuels or liquids in general that is particularly suitable for use in the automotive field.

It is known that one of the main problems of refuelings in general is the possibility to be absolutely certain of the quantity of fuel introduced in a tank with respect to an indication displayed on the dispensing unit which indicates the number of liters introduced and is of course associated with a sum for the person who performs refueling.

Currently, refuelings performed at ordinary petrol stations, for example in the automotive case, are unable to offer assurances of certainty of the quantity of fuel actually introduced in the tank. The operator of the refueling station may in fact tampers with the fuel dispensing device, with the consequence that the dispensed quantity is not equivalent to the quantity indicated by the indicator provided for this purpose.

Furthermore, the above cited problem can also occur for the operators of the refueling stations themselves, who in turn must be supplied with fuel from tank trucks, which transfer the content of their tank into the tanks of the refueling station operators. In this case also, therefore, and perhaps even more than in the case of vehicle refueling, checking the quantity of fuel actually transferred from the tanker to the tank of the refueling station is absolutely unable to give certainty, to the operator of the station which is being refueled, regarding the actual amount of fuel delivered.

The aim of the present invention is to provide a device for checking the quantity of gasolines, Diesel fuels, fuels or liquids in general during introduction in a tank that can be used in tanks that are not easily accessible for a conventional measurement.

Within this aim, an object of the present invention is to provide a device for checking the quantity of gasolines, Diesel fuels, fuels or liquids in general that allows to protect the user and/or the consumer from a financial standpoint, guaranteeing that the quantity introduced in the tank is actually the quantity that the user requested and will pay.

Another object of the present invention is to provide a device for checking the quantity of gasolines, Diesel fuels, fuels or liquids in general that can be calibrated for every tank shape and geometry.

Another object of the present invention is to provide a device for checking the quantity of gasolines, Diesel fuels, fuels or liquids in general that can also be calibrated according to the temperature and position of the tank.

Another object of the present invention is to provide a device for checking the quantity of gasolines, Diesel fuels, fuels or liquids in general that is highly reliable, relatively simple to manufacture and at competitive costs.

This aim and these and other objects that will become better apparent hereinafter are achieved by a device for checking the quantity of gasolines, Diesel fuels, fuels or liquids in general during introduction in a tank, characterized in that it comprises at least one ultrasound emission source and at least one ultrasound receiver, said ultrasound emission source being arranged so as to send a train of sound waves toward the free surface of the liquid that is present in the tank and to receive the sound beam reflected by the free surface of the liquid, the ratio of the speed of the sound waves with respect to the time between the emission of the sound waves by said ultrasound source and the reception of the sound waves providing a distance that constitutes a datum for calculating the quantity of liquid introduced in the tank.

Further characteristics and advantages of the present invention will become better apparent from the description of preferred but not exclusive embodiments of the device according to the present invention, illustrated only by way of non-limitative example in the accompanying drawings, wherein:
Figure 1 is a schematic view of the device according to the present invention, inserted in a tank;
Figures 2a and 2b are respectively schematic views of the device according to the invention inserted in a tank, at the beginning of refueling and at the end of refueling;

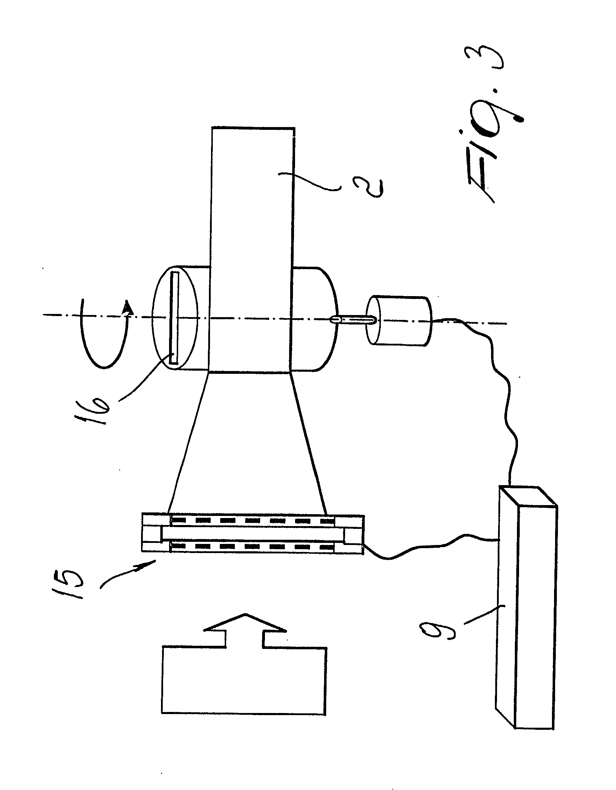

Figure 3 is a schematic view of a fuel quality checking device, which can be combined with the quantity checking device illustrated in the preceding figures.

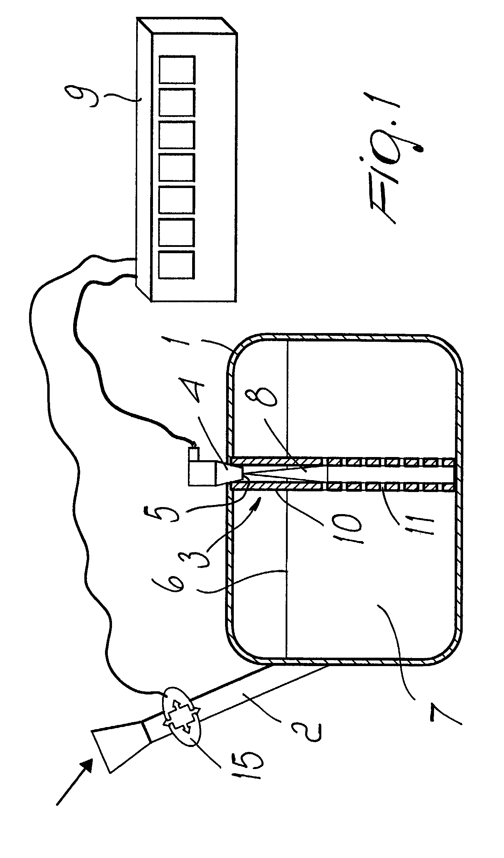

With reference to the figures, and initially to Figure 1, the device for checking the quantity of gasolines, Diesel fuels, fuels or liquids in general according to the present invention is suitable to be accommodated in a tank 1, which is provided with a tank feeding duct 2 in which a dispensing device for introducing gasolines, Diesel fuels, fuels and liquids in general, not shown in the figures, is inserted.

The device according to the present invention is conveniently designated by the reference numeral 3 and comprises at least one ultrasound emission source 4 and at least one receiver 5 for the ultrasound beam reflected by the free surface 6 of the liquid contained in the tank.

The ultrasound source 4 is arranged at the upper region of the tank and looks into the tank, so as to direct an ultrasound beam substantially at right angles to the free surface 6 of the liquid. In the figures, the liquid is designated by the reference numeral 7.

Substantially, the ultrasound source 4, calibrated according to the depth of the tank 1, emits continuously a train of sound waves, which are reflected by the free surface 6 of the liquid. The reflected wave is schematically designated by the reference numeral 8. The receiver 5 captures the reflected sound waves, and the ratio between the speed of sound and the time provides a distance which, after characterizing the tank, as described hereinafter, constitutes the main datum for calculating the quantity of liquid introduced in the tank 1.

The ultrasound source is conveniently connected to processing means 9, which are suitable to process the measured distance and thus provide a value, for example in liters, of the amount of liquid introduced in the tank 1.

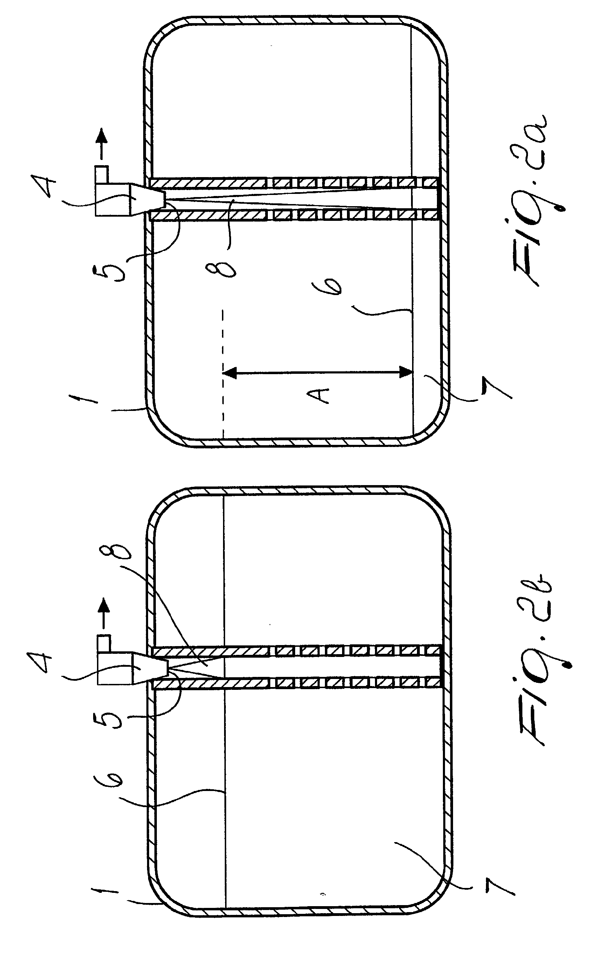

Conveniently, in order to improve the measurement, since the tank during refueling might be subjected to vibrations and/or movements that shake the free surface 6 of the liquid 7, thus biasing the measurement of the distance from the ultrasound emission source 4 to the free surface 6 of the liquid 7, it is possible to provide a stabilization duct 10, which is shown in Figures 1, 2a and 2b.

The duct 10 is arranged at the ultrasound source 4 and is such that the source 4 emits ultrasound within the duct 10, which thus extends from the upper surface of the tank 1 to the bottom of said tank.

The stabilization duct is conveniently provided with a plurality of side holes 11 in order to allow, by way of the principle of communicating vessels, to have inside it the same level of liquid that is present in the tank 1.

The diameter of the stabilization duct 10 is sized so as to take into account the value of the solid angle of emission of the ultrasound by the source 4, and likewise the length of the duct 10 is defined compatibly with the dimensions of its main portion, so as to extend substantially from the top surface of the tank to its bottom.

The characterization of the tank is required in order to obtain a precision that is suitable for the application; such characterization is performed only once per tank type and is stored in a memory (for example an EPROM) in processing means that comprise a microprocessor unit with programmable functions and data management functions.

Such characterization function allows to calculate exactly the quantity of liquid introduced both as a multiple and as a submultiple or fraction thereof. A liquid-crystal display allows to view the data of interest to the user (remaining liquid, introduced liquid, cost of introduced liquid, alarm due to poor quality of liquid) and the like.

Furthermore, the processing means 9 can be connected to a GPS, in order to also provide information regarding the refueling site.

The ultrasound source 4 is connected to the processing means 9 not only for the exchange of data but also to supply power thereto. However, it is possible to supply the device according to the invention by means of the power supply of the vehicle on which it is installed.

Figures 2a and 2b schematically illustrate a condition of a tank at the beginning of refueling, when the ultrasound beam 8 reflected by the free surface 6 of the liquid 7 has a certain length, and a condition of a tank at the end of refueling, in which the free surface 6 of the liquid has risen and the measurement A indicated in Figure 2a indicates the difference, i.e., the difference in level between the full tank of Figure 2b and the empty (or unfilled) tank of Figure 2a.

As regards the quality of the liquid introduced in the tank, it is possible to provide a quality measurement device 15 at the tank feed duct 2. Such device is designed to measure the quality and then provide an alarm datum to the processing means 9, which accordingly actuate an electric valve that closes the feed duct 2, thus providing "too full" information which, despite not being true, gives the user assurance that liquids or fuels not suitable for their purpose are not introduced.

The quality measurement device 15, which is disclosed in EPA-96119972.6 by the same Applicant and measures the conductivity of the liquid introduced in the tank, is combined, according to the present invention, with means 16 for interrupting the feed duct 2 of the tank 1, which are constituted for example by an electric valve which, being actuated by the processing means 9, closes the feed duct 2, thus providing the above cited "too full" information.

Substantially, the quality measurement device 15 is connected to the processing means 9, which are in turn suitable to drive the electric valve 16.

The device 15, which can be programmed to recognize foreign liquids, therefore measures not only instantaneously the difference in conductivity but also the time for which the foreign liquid has been dispensed. The two parameters, processed appropriately, control the driving of the electric valve 16.

The quantity control device according to the present invention can be provided with temperature measurement means, since the temperature can influence the volume of the liquid introduced in the tank, therefore compensating for the variation of density with temperature (warm liquids occupy a larger volume than the same liquids at lower temperatures).

It is also possible to provide additional ultrasound sources in order to measure the levels where the tank can vary significantly its position (for example due to considerable tilts).

It is further possible to provide an inertial position sensor to determine the position of the tank 1.

The device according to the invention can thus be installed in any tank suitable to contain liquids and used to measure the levels of any liquid, can be used for any kind of liquid, can be calibrated for any contour and geometry of the tank, also as a function of the temperature and position of the tank, and can be interfaced with a GPS in order to recognize the refueling site.

The device according to the invention can be used advantageously for example in the following fields: automotive, chemical, domestic, industrial chemistry, silos of valuable liquids such as oils, wines, et cetera, distribution silos of the food industry, and the like.

In practice it has been found that the device according to the present invention fully achieves the intended aim and objects, since it allows to measure in real time the quantity of liquid introduced in the tank, in order to ensure that the dispensed quantity is the quantity actually requested, which the user will then have to pay.

Furthermore, the device according to the invention can be combined with an additional liquid quality checking device, which in combination with the quantity control guarantees the user that the refueling he is performing is correct.

The device according to the present invention may as well be used to detect the level of fuel or liquid in general in a tank, thus giving a precise measurement of the quantity of the fuel, so as to provide a low fuel warning that may be associated with a light or a buzzer.

This function broadens the operative range of the present device.

The device thus conceived is susceptible of numerous modifications and variations, all of which are within the scope of the appended claims; all the details may further be replaced with other technically equivalent elements.

In practice, the materials used, so long as they are compatible with the specific use, as well as the dimensions and contingent shapes, may be any according to requirements and to the state of the art.

The disclosures in Italian Patent Application No. MI2001A000889 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for checking the quantity of gasolines, Diesel fuels, fuels or liquids in general during introduction in a tank, **characterized in that** it comprises at least one ultrasound emission source and at least one ultrasound receiver, said ultrasound emission source being arranged so as to send a train of sound waves toward the free surface of the liquid that is present in said tank and to receive the sound beam reflected by said free surface of the liquid, the ratio of the speed of the sound waves with respect to the time between the emission of said sound waves by said ultrasound source and the reception of said sound waves providing a distance that constitutes a datum for calculating the quantity of liquid introduced in the tank.

2. The device according to claim 1, **characterized in that** said at least one ultrasound source is connected to data processing means.

3. The device according to claim 1, **characterized in that** said at least one ultrasound source is arranged at the top of said tank and looks into said tank so as to direct said beam of sound waves substantially at right angles to the free surface of said liquid.

4. The device according to one or more of the preceding claims, **characterized in that** it comprises a stabilization duct, suitable to be inserted in said tank and into which said at least one ultrasound source looks.

5. The device according to one or more of the preceding claims, **characterized in that** said stabilization duct is provided with a plurality of side holes so that the same level of liquid that is present in said tank is established within said duct.

6. The device according to one or more of the preceding claims, **characterized in that** said stabilization duct extends substantially from the top of said tank to the bottom of said tank.

7. The device according to one or more of the preceding claims, **characterized in that** it comprises, at a feed duct of said tank, means for measuring the quality of the liquid introduced in said tank.

8. The device according to one or more of the preceding claims, **characterized in that** said means for measuring the quality of said liquid are connected to said processing means.

9. The device according to one or more of the preceding claims, **characterized in that** it comprises, at said duct for feeding said tank, means for interrupting said duct which are driven by said processing means.

10. The device according to one or more of the preceding claims, **characterized in that** said means for measuring the quality of the liquid are suitable to measure the conductivity of said liquid.

11. The device according to one or more of the preceding claims, **characterized in that** said distance calculated as a ratio between the speed of said sound waves and the time between the emission of said sound waves and their reception corresponds to the difference in level between the free surface of the liquid when refueling begins and the surface of the liquid when the refueling of the tank ends.

12. Use of a device for checking the quantity of gasolines, Diesel fuels, fuels or liquids in general, according to claim 1, for detecting the level of the gasoline, Diesel fuel or liquids inside a tank and provide a low fuel warning.
